(19) Europäisches Patentamt
European Patent Office
Office européen des brevets

(11) **EP 3 932 517 A1**

(12) **EUROPÄISCHE PATENTANMELDUNG**

(43) Veröffentlichungstag:
**05.01.2022 Patentblatt 2022/01**

(21) Anmeldenummer: **21180852.2**

(22) Anmeldetag: **22.06.2021**

(51) Int Cl.:
**B01D 39/02** (2006.01)     **A41D 13/11** (2006.01)
**A62B 18/00** (2006.01)     **A62B 18/02** (2006.01)
**A62B 18/10** (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **29.06.2020   DE 102020116991**

(71) Anmelder:
• **Durst, Franz**
  **91094 Langensendelbach (DE)**

• **Reinhardt, Erich**
  **91301 Forchheim (DE)**

(72) Erfinder:
• **Durst, Franz**
  **91094 Langensendelbach (DE)**
• **Reinhardt, Erich**
  **91301 Forchheim (DE)**

(74) Vertreter: **Meyer, Rudolf**
  **Meyer & Dörring GbR**
  **Patentanwälte**
  **Nürnberger Straße 49**
  **91052 Erlangen (DE)**

(54) **ATEMLUFTFILTER UND VERFAHREN ZUM BETRIEB EINES ATEMLUFTFILTERS**

(57)     Ein Atemluftfilter (1) umfasst eine auf einer Trägerschicht (6) befindliche Filterschicht (7), welche aus kugeligen Partikeln (9) eines ersten Typs, die einen ersten mittleren Durchmesser ($D_9$) aufweisen, und kugeligen Partikeln (10) eines zweiten Typs, die einen im Vergleich mit den Partikeln (9) ersten Typs geringeren zweiten mittleren Durchmesser ($D_{10}$) aufweisen, aufgebaut ist, wobei die Häufigkeitsverteilung ($V_9$, $V_{10}$) der Abstände der Partikelmittelpunkte von der Trägerschicht (6) bei jedem Partikeltyp (9, 10) mindestens ein Maximum ($M_g$, $M_{10}$) aufweist, und wobei zwischen einem Maximum ($M_g$) der die Partikel (9) ersten Typs betreffenden Häufigkeitsverteilung ($V_9$) und einem Maximum ($M_9$, $M_{10}$) der die Partikel (10) zweiten Typs (10) betreffenden Häufigkeitsverteilung ($V_{10}$) ein Abstand (MA) existiert, welcher geringer als der erste mittlere Durchmesser ($D_9$) ist. Der Atemluftfilter (1) kann zum Betrieb mit teilweiser Rezirkulation der Luft vorgesehen sein.

**Fig. 1**

EP 3 932 517 A1

**Beschreibung**

Die Erfindung betrifft einen Atemluftfilter, welcher eine Filterschicht umfasst, die eine Vielzahl an Partikeln zum Filtern der Luft enthält. Ferner betrifft die Erfindung ein Verfahren zum Betrieb eines Atemluftfilters.

Die DE 37 19 419 A1 offenbart eine für eine Atemschutzmaske vorgesehene Filterpatrone, in deren Gehäuse sich ein Filterelement befindet, das mindestens eine Lage aus einem elastisch flexiblen Trägermaterial aufweist. Beim Trägermaterial kann es sich um ein offenporiges Schaummaterial oder ein bauschiges fülliges Material handeln. Das Trägermaterial ist mit einem Klebemittel versehen, an und/oder in dem Adsorberpartikel befestigt sind.

Die DE 37 19 233 A1 beschreibt einen selbsttragenden mechanisch bearbeitbaren Filterkörper zum Reinigen von Leitungswasser. Der Filterkörper umfasst Teilchen aus pulverförmiger Aktivkohle und Teilchen eines thermoplastischen Bindemittels, die mit den Aktivkohleteilchen durch Druck und Temperatureinwirkung verbunden worden sind.

Die DE 28 04 154 B1 beschreibt ein Filtermaterial aus einem offenporigen, flexiblen Schaumstoffträger, wobei die Porenwände des Schaumstoffträgers Adsorberpartikel tragen. Zusätzlich sind in Poren des Schaumstoffträgers poröse Adsorberkörner eingelagert. Das Filtermaterial soll unter anderem im medizinischen Apparatebau und im Klimaanlagenbau verwendbar sein.

Ein in der DE 10 2012 215 877 A1 beschriebenes Filterelement soll insbesondere für Fahrzeuganwendungen geeignet sein. Eine hohe Filterwirkung und/oder Stabilität des Filterelementes soll dadurch erreicht werden, dass auf einer ersten Seite eine niedrigere Porosität als auf der zweiten Seite gegeben ist. Auf der ersten Seite ist zumindest bereichsweise eine Nanofaserschicht aufgebracht.

Ein möglicher Aufbau einer Aktivkohlefilterschicht für Gasmasken ist in der DE 38 13 564 A1 beschrieben. Die Aktivkohlefilterschicht enthält ein hochluftdurchlässiges, im Wesentlichen formstabiles Trägergerüst, welches aus Drähten aufgebaut sein kann. An dem Trägergerüst ist eine Schicht von körnigen Aktivkohleteilchen eines Durchmessers von 0,1 bis 1 mm fixiert.

Eine Luftfilter-Atemmaske ist zum Beispiel aus der WO 2008/052342 A1 bekannt. Die bekannte Luftfilter-Atemmaske weist mehrere Materialschichten auf, einschließlich mindestens einer Schicht aus einem Luftfiltermaterial, und soll unter anderem für medizinische Zwecke geeignet sein.

Die EP 0714 696 A2 offenbart einen Adsorptions-Luftfilter, welcher aus einer selbsttragenden, geformten Struktur von Adsorber-Partikeln regulärer oder irregulärer Gestalt aufgebaut ist, die miteinander durch Bindemittel-Partikel mit ebenfalls regulärer oder irregulärer Gestalt verbunden sind. Der Adsorptions-Luftfilter ist insbesondere für die Verwendung in einer Luftzufuhr-Vorrichtung zur Innenraumbelüftung eines Kraftfahrzeugs vorgesehen.

Die WO 2019/105611 A1 beschreibt ein Flächenfiltermaterial, welches eine Schutzfunktion gegenüber chemischen, biologischen und/oder radioaktiven Schad- und Giftstoffen erfüllen soll. Das Flächenfiltermaterial umfasst ein luftdurchlässiges flächiges Trägermaterial und eine hierauf befindliche Aerosol- und/oder Partikelfilter-Nanofaserschicht.

Ein Filterelement mit Kugeln in einer Filterschicht ist beispielsweise aus der EP 2 363 185 B1 bekannt. Es handelt sich hierbei um ein rückspülbares Filterelement für Flüssigkeiten.

Ein in der DE 44 03 359 C2 beschriebener Filter ist als geschichteter Filterverbund aufgebaut und enthält Mikroperlen aus Glas. Deren Größen sind nicht geeignet, kleine Partikel aus der Atemluft zu filtern.

Die DE 42 07 533 C2 offenbart ein Atemschutzgerät mit Atemluftrückführung. Teil des Atemschutzgerätes ist ein Kohlendioxid-Sensor, welcher dazu ausgebildet ist, ein Ventil in Abhängigkeit von einem gemessenen Kohlendioxidgehalt zu steuern.

Was die Normung von Luftfiltern betrifft, wird auf die Norm DIN EN 779 "Partikel-Luftfilter für die allgemeine Raumlufttechnik" hingewiesen, die die Prüfung und Abscheideleistung von Filtern zum Gegenstand hat. Des Weiteren wird auf die Norm DIN EN 1822 "Schwebstofffilter (EPA, HEPA und ULPA)" hingewiesen.

Allgemein sind Partikelfilter im Hinblick auf die geometrischen Eigenschaften der abzuscheidenden Partikel sowie den gewünschten Abscheidegrad auszuwählen.

Bei gängigen FFP 1/2/3 - Masken handelt es sich um Feinstaub-Masken mit Filtereigenschaften, die nicht in der Lage sind, Viren aus der Atemluft zu entfernen. Es liegen Filterbegrenzungen für Teilchen im Bereich von 300 - 600 nm vor. Viren, z. B. Corona-Viren, besitzen jedoch Größen im Bereich von nur 120 bis 160 nm.

Der Einsatz üblicher Masken zur Abwehr von Corona Infektionen wirkt nur dann, wenn die Corona-Viren an "Speicheltröpfchen" gebunden sind. Nur dann haben die Viren (samt Speichel) die Abmessungen von Trägertröpfchen, die mittels der FFP 1/2/3-Masken aus der Atemluft entfernt werden können. Verdampfen die Tröpfchen, so schweben die freigesetzten Viren für Stunden in der Luft und können so über die Atemluft, trotz der Filtermasken, eingeatmet werden.

Handelsübliche FFP 1-2-3-Masken besitzen hohe Atemluftwiderstände, die bei Abnahmetests für die Masken für Luftströme von 30l/min und 95l/min ab Abnahmebedingung gemessen werden. In der Klasse FFP2 beträgt der maximale Atemwiderstand bei einer Atemleistung von 30 l Luft pro Minute 0,7 mbar und bei 95 l/min bereits mehr als das Dreifache hiervon, nämlich 2,4 mbar. In der Klasse FFP3 betragen die entsprechenden Werte (für 30 l bzw. 90 l Atemluft pro Minute) 1,0 mbar und 3,0 mbar.

Diese Atemluftwiderstände für die medizinische Anwendung sind als zu hoch einzustufen und führen zu geforderten Atmungsleistungen, die nicht für eine lange Zeitdauer, ohne Ermüdungserscheinungen, aufgebracht werden können.

Prinzipiell sind Partikelfilter umso besser für die Abscheidung auch kleinster Partikel geeignet, je kleiner die Öffnungen des Filters sind. Dieser Zusammenhang gilt bei Filtern mit faserigem Filtermaterial im Grundsatz ebenso wie bei Filtern mit granularem Filtermaterial. In allen Fällen geht die Reduktion von Öffnungsweiten, beispielsweise Porengrößen bei gesinterten Filtermaterialien, mit einem Anstieg des beim Betrieb des Filters auftretenden Druckverlusts einher. Abhilfe ist prinzipiell durch eine Vergrößerung der Filterfläche denkbar.

Hintergrundinforationen zu Eigenschaften von Fluiden, welche durch Schüttungen strömen, sind beispielsweise folgender Publikation zu entnehmen: Ergun, Sabri: fluid flow through packed columns, Chemical Engineering Progress, Vol. 48 No. 2 (1952), p. 89 - 94

Im Fall einer mondispersen Kugelschüttung beträgt der Druckverlust $\Delta P_F$, welcher beim Filtern auftritt, beispielsweise

$$\Delta P_F = 150 \cdot \frac{(1-\varepsilon)^2}{\varepsilon^3 D_K{}^2} \cdot \mu \cdot (U_0)_F \cdot \Delta L_F,$$

wobei $\varepsilon$ die Schüttungsporosität, $D_K$ den Durchmesser der Kugeln, aus welchen die Schüttung gebildet ist, $\mu$ die Viskosität des strömenden Fluids, $(U_0)_F$ die Anströmgeschwindigkeit des Filters und $\Delta L_F$ dessen in Strömungsrichtung zu messende Ausdehnung bezeichnet.

Besteht eine Schüttung aus Partikeln unterschiedlicher Größe, so hat zum einen die mittlere Partikelgröße und zum anderen die Breite der Partikelgrößenverteilung Einfluss auf die Filterwirkung sowie auf den beim Filtern eines Fluids, das heißt einer Flüssigkeit oder eines Gases, auftretenden Druckverlust. Zu einer verbesserten Filterwirkung trägt nicht nur eine Reduktion der Partikelgröße, sondern auch eine Verbreiterung der Partikelgrößenverteilung bei. Ein besonders breites Spektrum unterschiedlichster Größen von Partikeln, welche zusammen eine Schüttung bilden, hat jedoch auch eine hohe Dichte der Schüttung und einen besonders hohen Strömungswiderstand zur Folge. Von daher besteht, bei jeglicher Zusammensetzung einer Schüttung, ein Zielkonflikt zwischen der gewünschten Filterwirkung einerseits und auftretenden Druckverlusten andererseits.

Der Erfindung liegt vor diesem Hintergrund die Aufgabe zugrunde, einen Atemluftfilter gegenüber dem Stand der Technik dahingehend weiterzuentwickeln, dass ein besonders günstiges Verhältnis zwischen Filterwirkung einerseits und bei der Nutzung des Filters auftretenden Druckdifferenzen andererseits gegeben ist. Insbesondere sollen Viren aus der Atemluft gefiltert werden, die kleiner als Corona-Viren sind, beispielsweise Viren mit einer Größe ab 50 nm.

Diese Aufgabe wird erfindungsgemäß gelöst durch einen Atemluftfilter mit den Merkmalen des Anspruchs 1. Ebenso wird die Aufgabe gelöst durch ein gemäß Anspruch 8 gestaltetes Verfahren zum Betrieb eines Atemluftfilters. Im Folgenden im Zusammenhang mit dem Betriebsverfahren erläuterte Ausgestaltungen und Vorteile der Erfindung gelten sinngemäß auch für die Vorrichtung, das heißt den Atemluftfilter, und umgekehrt.

Der Atemluftfilter umfasst eine auf einer Trägerschicht befindlichen Filterschicht, welche aus kugeligen Partikeln eines ersten Typs, die einen ersten mittleren Durchmesser aufweisen, und kugeligen Partikeln eines zweiten Typs, die einen im Vergleich mit den Partikeln ersten Typs geringeren zweiten mittleren Durchmesser aufweisen, aufgebaut ist. Hierbei weist die Häufigkeitsverteilung der Abstände der Partikelmittelpunkte von der Oberfläche der Trägerschicht bei jedem Partikeltyp mindestens ein Maximum, insbesondere mehrere Maxima, auf, wobei zwischen einem Maximum der die Partikel ersten Typs betreffenden Häufigkeitsverteilung und einem Maximum der die Partikel zweiten Typs betreffenden Häufigkeitsverteilung ein Abstand existiert, welcher geringer als der erste mittlere Durchmesser, das heißt der Durchmesser der größeren Teilchen der Filterschicht, ist.

Die Filterschicht, welche aus verschiedenen, vorzugsweise kugeligen Partikeln unterschiedlichen Durchmessers aufgebaut ist, kann beispielsweise in eine als Hartschale ausgebildete Maske oder in ein Filtertuch integriert sein. Ebenso kann die Filterschicht Teil einer Vorrichtung, beispielsweise einer Filterbox, sein, welche beabstandet vom Gesicht des Nutzers zur Anwendung kommt. Letzteres gilt insbesondere für Ausführungsformen mit Umluftführung, auf welche noch näher eingegangen werden wird.

In allen Fällen unterscheidet sich die Filterschicht grundlegend sowohl von Filtermaterialien, bei welchen Partikel unterschiedlicher Größe gleichmäßig miteinander vermischt sind, als auch von Filteranordnungen, bei welchen Filterpartikel unterschiedlicher Größe aufeinander geschüttet sind. Vielmehr ist innerhalb der Filterschicht des Atemluftfilters eine geometrisch definierte Anordnung der unterschiedlichen, zum Filtern eingesetzten Partikel gegeben, wobei dies nicht bedeutet, dass jeder einzelne Partikel einen individuell vorgegebenen Platz innerhalb der Filterschicht einnimmt.

Die Tatsache, dass Maxima der Häufigkeitsverteilungen der Mittelpunkte der Partikel, sowohl bei den größeren Partikeln als auch bei den kleineren Partikeln, gegeben sind, ist gleichbedeutend damit, dass Ebenen existieren, in welchen die jeweiligen Partikel schwerpunktmäßig angeordnet sind, was bei einer gleichmäßig durchmischten Schüttung nicht der Fall wäre. Im grundlegenden Unterschied zu einer durchmischten Anordnung von Filterpartikeln sind die kleineren Partikel der anmeldungsgemäßen Filterschicht, jedenfalls mit statistisch erkennbarer Signifikanz, in feststellbarer Regelmäßigkeit relativ zu den größeren Partikeln angeordnet, wobei auch hinsichtlich der Anordnung der größeren Partikel eine Regelmäßigkeit der Anordnung feststellbar ist. Insgesamt existiert damit eine Kombination von Regelmäßigkeiten der Partikelanordnungen.

Was die Anordnung der größeren Partikel, das heißt Partikel ersten Typs, betrifft, ist vorzugsweise ein hexagonales Gitter ausgebildet, das heißt die dichtest mögliche Packung der Partikel in einer Ebene gegeben. Die kleineren Partikel befinden sich zumindest mit feststellbarer Häufung in den Lücken, die zwischen den größeren Partikeln zwangsläufig frei gelassen sind. Durch das weitgehende Schließen dieser Lücken verbleiben lediglich Öffnungen, welche kleiner als die Partikel zweiten Typs sind. Die Filterschicht ist damit in der Lage, Teilchen, beispielsweise Viren ohne jegliche Feuchtigkeitshülle, zurückzuhalten, deren Abmessungen nicht nur den Durchmesser der größeren Partikel der Filterschicht, sondern auch den Durchmesser der kleineren Partikel der Filterschicht unterschreiten. Zugleich tritt aufgrund des sparsamen, gezielten Einsatzes der filternden Partikel ein im Vergleich zu herkömmlichen Luftfiltern besonders geringer Druckverlust auf. Im Vergleich zu Atemmasken, wie sie zum Prioritätszeitpunkt der vorliegenden Anmeldung handelsüblich waren, ist der Druckverlust des anmeldungsgemäßen Atemluftfilters trotzt in den meisten Fällen weitaus besserer Filterwirkung auf etwa ein Viertel reduziert.

Gemäß verschiedener möglicher Ausgestaltungen beträgt der mittlere Durchmesser der größeren Partikel der Filterschicht mindestens das Dreifache, insbesondere das Fünffache oder mehr, des mittleren Durchmessers der kleineren Partikel. Beispielsweise beträgt der erste mittlere Durchmesser mindestens 3 $\mu$m und höchstens 10 $\mu$m, wogegen der zweite mittlere Durchmesser, das heißt der durchschnittliche Durchmesser der kleineren Partikel, mindestens 50 nm und höchstens 2 $\mu$m beträgt. Hierunter fallen zum Beispiel Bauformen, in welchen die größeren Partikel einen Durchmesser von 5 $\mu$m und die hiervon klar unterscheidbaren kleineren Partikel einen Durchmesser von 1 $\mu$m aufweisen. Eine aus solchen Partikeln unterschiedlicher Größe in definierter Weise aufgebaute Filterschicht weist zum Beispiel eine Packungsdichte von mehr als 74% auf.

Als Partikel ersten Typs und/oder als Partikel zweiten Typs kommen insbesondere keramische Partikel, zum Beispiel Kügelchen aus $Si_2O_3$, in Betracht. Bei der Trägerschicht, auf welcher die Partikel ersten Typs platziert werden, ist beispielsweise ein feinfaseriges Vlies verwendbar. Zusätzlich zur Trägerschicht kann eine die Filterschicht abdeckende Deckschicht vorgesehen sein, deren Aufbau mit der Trägerschicht nicht notwendigerweise übereinstimmt. Der Druckabfall in der Trägerschicht sowie in der Deckschicht ist in jedem Fall - auch summiert - wesentlich geringer als der Druckabfall in der Filterschicht.

Die auf der Trägerschicht aufliegende Filterschicht weist bevorzugt mindestens zwei und höchstens vier Lagen an Partikeln des ersten Typs auf, wobei Partikel ersten Typs, welche unterschiedlichen Lagen zuzurechnen sind, unmittelbar aufeinander liegen und zwischen diesen sich kontaktierenden Partikeln erstens Typs Partikel des zweiten Typs platziert sind.

Bei der sukzessiven Herstellung der einzelnen Lagen der Filterschicht wird, nachdem die erste Lage an Partikeln ersten Typs auf dem Substrat, das heißt der Trägerschicht, platziert ist, die anschließend vorgesehene Anzahl an Partikeln zweiten Typs an den vorgesehenen Stellen, das heißt jeweils in zwischen Partikeln ersten Typs gebildeten Filterporen, abgelegt, indem beispielsweise ein Flüssigkeits-Feststoff-Gemisch, welches die Partikel zweiten Typs als Feststoffe enthält, durch die bereits existierende erste Lage an Partikeln ersten Typs sowie die darunterliegende, durchlässige Trägerschicht geleitet wird. Die Filterporen zwischen den sphärischen Partikeln ersten Typs stellen düsenförmige Verengungen für die durchströmende Flüssigkeit dar, so dass die kleinen Partikel zweiten Typs in diese Verengungen gezogen werden und aufgrund der Dimensionsverhältnisse der verschiedenen Partikel dort verbleiben. Für die Herstellung der Schichten aus den verschiedenen Partikel sind auch Spray-Verfahren geeignet.

Zur Herstellung sowohl der größeren als auch der kleineren Partikel der Filterschicht ist insbesondere das Sol-Gel-Verfahren geeignet. Zum technischen Hintergrund wird beispielhaft auf die Dokumente EP 1 329 433 B1 und EP 2 134 885 B1 hingewiesen.

Gemäß einer möglichen Variante des Betriebs des Atemluftfilters wird ein Teil der Atemluft rezirkuliert. Hierbei wird die rezirkulierende Luft vorzugsweise mit Hilfe eines von dem Atemluftfilter räumlich getrennten Gebläses, vereinfachend auch als Pumpe bezeichnet, gefördert. Dabei kann eine Luftmischung, welche zum größeren Teil aus ausgeatmeter Luft und lediglich zu einem geringeren Teil aus Frischluft gebildet ist, rezirkuliert werden.

Optional ist die Rezirkulation der Luft mit einer Einrichtung zur Erfassung der Zusammensetzung der in dem Filter-Gebläse-Gesichtsmasken-System vorhandenen Luft, insbesondere zur Messung des Sauerstoff- und/oder $CO_2$-Gehalts, verknüpft. Damit kann der Umluftanteil in Abhängigkeit vom Sauerstoffverbrauch automatisch verstellt werden. Theoretisch sind auch über die Filterung hinausgehende Einrichtungen zur Aufbereitung der einzuatmenden Luft in das Filter-Gebläse-Gesichtsmasken-System integrierbar.

Solche Einrichtungen können Teil einer Filterbox sein, welche vom Träger der Atemmaske beispielsweise am Rücken, am Gürtel, oder wie eine Umhängetasche getragen wird. Ist eine derartige Filterbox vorhanden, so kann der Maskenkörper, welcher den Mund-Nase-Bereich des Nutzers abdeckt, entweder zusätzlich als filterndes Element oder als luftundurchlässiges Element ausgebildet sein. Im letztgenannten Fall erfolgt die Luftzufuhr ausschließlich über mindestens einen Schlauch oder ein sonstiges luftleitendes Element, welches fluidtechnisch mit der Filterbox gekoppelt ist. Auch ein direktes Anflanschen einer Filterbox an einen ergonomisch gestalteten Maskenkörper, typischerweise im Kinnbereich, ist denkbar.

Insbesondere in Ausführungsformen, in welchen die einzuatmende Luft teilweise durch die Filterbox und teilweise durch das Filtermaterial des Maskenkörpers geleitet wird, kann der Maskenkörper eine Mischluftkammer aufweisen, welche durch jeweils eine Filterschicht einerseits vom Außenraum und andererseits von einem dem Gesicht des Nutzers unmittelbar vorzusetzenden Luftbereitstellungsraum getrennt ist, wobei zwischen den direkt an das Gesicht des Nutzers grenzenden Luftbereitstellungsraum und die Mischluftkammer ein Überdruckventil geschaltet sein kann. Dieses Überdruckventil kann einstellbar sein, um den Überdruck beim Ausatmen oder Druckverhältnisse bei der Luftzirkulation einzustellen.

Im Fall einer Luftzirkulation ist an die Mischluftkammer typischerweise mindestens eine luftführende Leitung angeschlossen, welche mit der Filterbox verbunden ist. Eine in den Luftbereitstellungsraum führende, ebenfalls mit der Filterbox gekoppelte Leistung zur Zuführung von Luft kann mit einer Einstellvorrichtung für den Zuluftstrom versehen sein.

Die Pumpe, das heißt das Gebläse, kann mit der Filterbox zu einer baulichen Einheit zusammengefasst sein. Allgemein ist die Pumpe, bei welcher es sich um ein Kleinstgebläse an sich üblicher Bauart handeln kann, dazu vorgesehen, eine Mischung aus mittels eines gesonderten Frischluftfilters, das heißt der Filterbox, aufbereiteter, feingefilterter Frischluft und rezirkulierender Luft zu fördern. Optional wird ein Teil der zirkulierenden Luft permanent über ein Ablassventil nach außen abgeleitet. Je nach Einsatzbedingungen des Atemluftfilters kann diese Abluft entweder gefiltert oder ungefiltert an die Umgebung abgegeben werden. Im letztgenannten Fall ist der Atemluftfilter ausschließlich zum Schutz seines Trägers, nicht jedoch zum Schutz von Personen in dessen Umgebung vorgesehen.

Unabhängig davon, ob ein Teil der Atemluft rezirkuliert wird, ist es durch die Verwendung einer Pumpe möglich, negative Atemluftwiderstände zu erzeugen, das heißt die Atmung des Trägers der Maske maschinell zu unterstützen. Ist eine solche Atemunterstützung nicht gewünscht, fördert die Pumpe vorzugsweise mit einer Leistung, die dem Nutzer des Atemluftfilters den Eindruck einer freien, ungehinderten Atmung vermittelt.

Der Vorteil der Erfindung liegt - auch in Varianten ohne Pumpe - insbesondere darin, dass der Zielkonflikt zwischen einer hervorragenden Filterwirkung einerseits und einem geringen Druckverlust andererseits zu einem bedeutenden Teil dadurch aufgelöst wird, dass eine sehr dünne Filterschicht verwendet wird, welche aus zwei Partikeltypen unterschiedlicher Größe aufgebaut ist, wobei die verschieden großen Partikel, insbesondere keramischen Kugeln, in geometrisch definierter Anordnung in der Filterschicht platziert sind.

Nachfolgend werden mehrere Ausführungsbeispiele der Erfindung anhand einer Zeichnung näher erläutert. Hierin zeigen:

Fig. 1    einen Menschen, welcher einen Atemluftfilter trägt, in einer Übersichtsdarstellung,

Fig. 2    ein Filterelement des Atemluftfilters in einer schematischen Schnittdarstellung,

Fig. 3    weitere Details des Filterelements in idealisierter Darstellung,

Fig. 4    in einem Diagramm Häufigkeitsverteilungen von Partikelmittelpunkten verschiedener Partikel des Filterelements, bezogen auf die Anordnung nach Fig. 3,

Fig. 5,   den mehrlagigen Aufbau einer Filterschicht der Filterelements in perspektivischer Ansicht,

Fig. 6    eine Draufsicht auf die Anordnung nach Fig. 5,

Fig. 7    ein Ausführungsbeispiel eines Atemluftfilters mit Luftzirkulation,

Fig. 8    in symbolisierter Darstellung Komponenten, unter anderem eine Pumpe und eine Filterbox, des Atemluftfilters nach Fig. 7,

Fig. 9    ein weiteres Ausführungsbeispiel eines Atemluftfilters mit Luftzirkulation in einer Ansicht analog Fig. 7, mit Luftansaugung aus dem Mundbereich und aus der Umgebung, das heißt dem Außenbereich,

Fig. 10   die Anordnung nach Fig. 9 in Frontansicht, wobei die Frontansicht des Atemluftfilters nach Fig. 7 in dem entsprechenden Ausschnitt hiermit übereinstimmt.

Die folgenden Erläuterungen beziehen sich, soweit nicht anders angegeben, auf sämtliche Ausführungsbeispiele. Einander entsprechende oder prinzipiell vergleichbare Teile und Parameter sind in allen Figuren mit den gleichen Bezugszeichen gekennzeichnet.

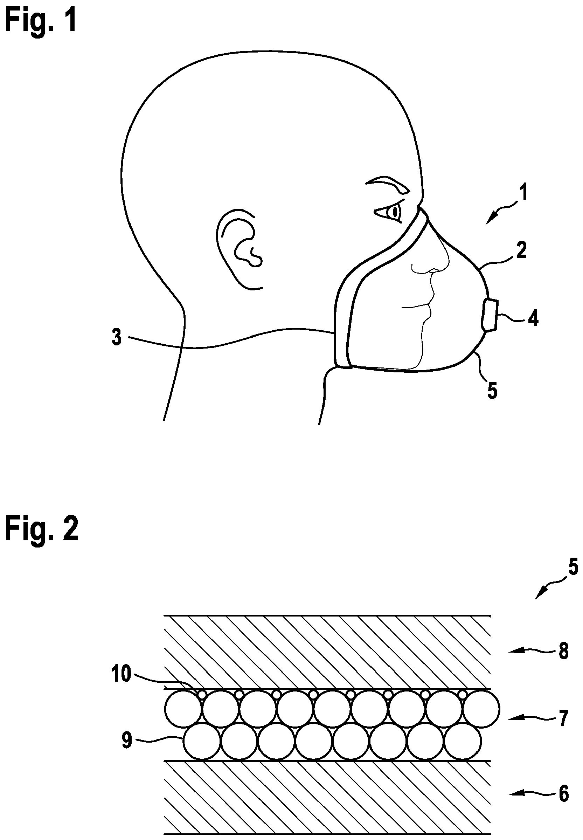

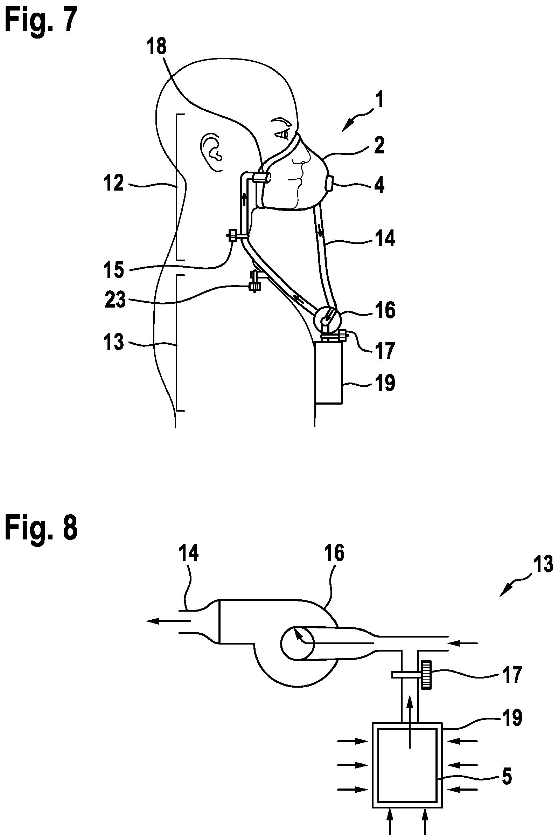

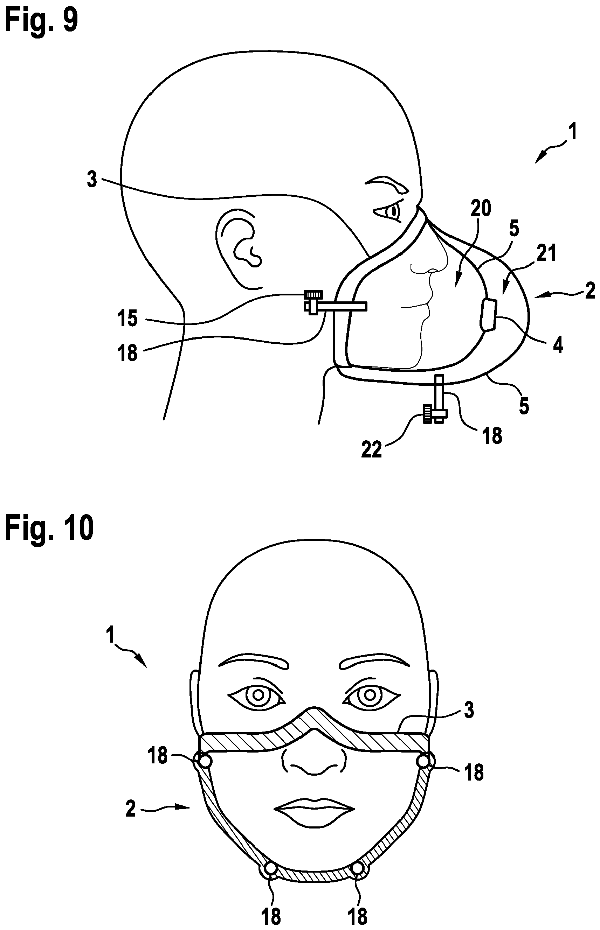

Ein insgesamt mit 1 bezeichneter Atemluftfilter erfüllt den Zweck, Personen vor kleinsten Teilchen, selbst vor Viren, beispielsweise Corona-Viren, zu schützen. Ein Maskenkörper 2 des Atemluftfilters 1, welcher auch als Atemmaske im engeren Sinne bezeichnet wird, ist in den Ausführungsbeispielen als Hartschale ausgeführt und liegt, rundum abgedichtet durch eine Dichtung 3, am Gesicht des Trägers an. Ein Überdruckventil des Atemluftfilters 1, welches sich entweder außen am Maskenkörper 2 (Fig. 1; Fig. 7) oder innerhalb des Maskenkörpers 2 (Fig. 9, 10) befindet, ist mit 4 bezeichnet.

Der Maskenkörper 2 ist als Hartschale gestaltet und hauptsächlich aus einem Filterelement 5 aufgebaut. Hierbei ist die Möglichkeit gegeben, dass der komplette oder nahezu komplette Maskenkörper 2 mit dem Filterelement 5 identisch ist. Alternativ kann der Maskenkörper 2 Strukturen umfassen, welche lediglich eine tragende, jedoch keine filternde Funktion haben. In beiden Fällen kann gefilterte Luft direkt durch den Maskenkörper 2 eingeatmet werden.

Das Filterelement 5 umfasst eine aus einem faserigen Material hergestellte Trägerschicht 6, eine auf der Trägerschicht 6 befindliche Filterschicht 7, die den Hauptteil der gewünschten Filterfunktion übernimmt, sowie eine die Filterschicht 7 abdeckende Deckschicht 8, die entsprechend der Trägerschicht 6 aufgebaut sein kann. Abweichend von der Prinzipskizze gemäß Fig. 2 kann die Filterschicht 7 wesentlich dünner als die unmittelbar darunter- und darüberliegenden Schichten 6, 8 sein.

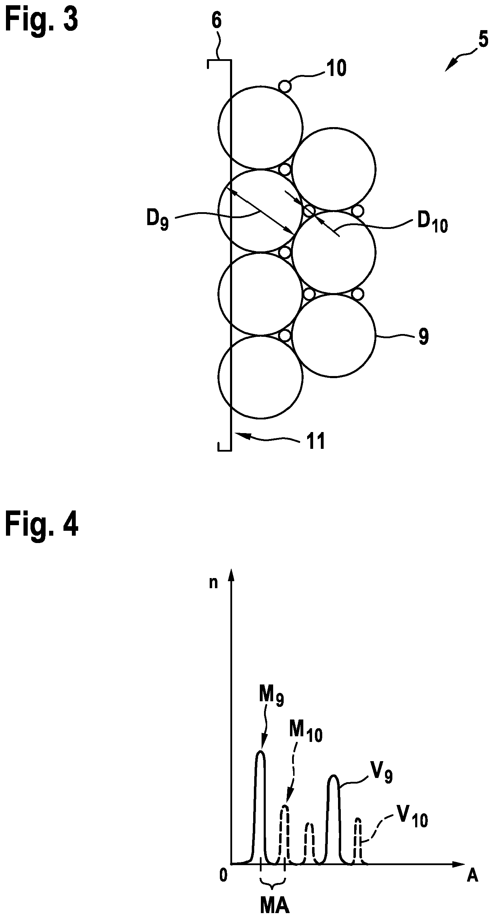

Die auf der Oberfläche 11 der Trägerschicht 6 aufliegende Filterschicht 7 ist aus kugeligen Partikeln 9 ersten Typs und ebenfalls kugeligen Partikeln 10 zweiten Typs aufgebaut. Ein geringfügiges Eindringen der Partikel 9 ersten Typs in die Oberfläche 11 ist in Fig. 3 angedeutet. Der mitlere Durchmesser der Partikel 9 ersten Typs ist mit Dg bezeichnet und beträgt in den Ausführungsbeispielen 5 $\mu$m. Die Partikel 10 weisen einen mittleren Durchmesser $D_{10}$ von 1 $\mu$m auf. Bei sämtlichen Partikeln 9, 10 handelt es sich um keramische Kugeln aus $Si_2O_3$, welche im Sol-Gel-Verfahren hergestellt sind. Alternativ können kugelförmige Partikel 9, 10 aus anderen Materialien, welche ebenfalls im Sol-Gel-Verfahren herstellbar sind, in der Filterschicht 7 verwendet werden.

In Fig. 3 ist ein Ausschnitt aus der Filterschicht 7 veranschaulicht, wobei die größeren Partikel 9 in zwei definierten, zur Oberfläche 11 parallelen Ebenen angeordnet sind. Im Diagramm nach Fig. 4, welches die Häufigkeit der Abstände der Partikel 9, 10 von der Oberfläche 11 zeigt, sind dementsprechend zwei mit durchgezogener Linie gezeichnete Peaks (Verteilung Vg) erkennbar, welche die Lage der Mittelpunkt der Kugeln 9 anzeigen.

Die im Vergleich zu den Kugeln 9 wesentlich kleineren Kugeln 10 werden, nachdem die erste Ebene an Kugeln 9 hergestellt ist, durch einen Flüssigkeitsstrom, der auf die Oberfläche 11 zu gerichtet ist und die Trägerschicht 6 durchströmt, so nahe wie möglich an der Oberfläche 11 platziert, wie in den Figuren 3 und 4 idealisiert dargestellt ist. Entsprechende Peaks einer Verteilung $V_{10}$, welche sich auf die Häufigkeit der Lage der Mittelpunkte der Kugeln 10 in Relation zur Oberfläche 11 bezieht, sind in Fig. 4 gestrichelt eingezeichnet. Weiter ist in Fig. 4 ein Abstand MA, der zwischen den am geringsten von der Oberfläche 11 beabstandeten Peaks der Verteilungen $V_9$, $V_{10}$ gegeben ist, eingezeichnet. Dieser Abstand MA ist geringer als der Durchmesser $D_9$ der größeren Partikel 9.

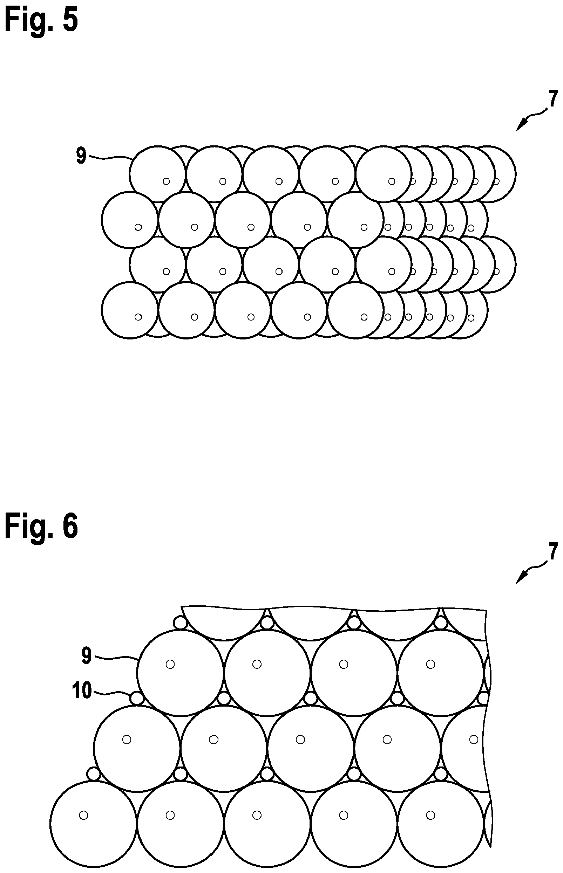

Insgesamt ist die Filterschicht 7, wie sie in Fig. 5 visualisiert ist, aus vier Lagen an größeren Partikeln 9 und zwischen diesen angeordneten kleineren, ebenfalls sphärischen Partikeln 10 aufgebaut (Anmerkung: Die kleineren Kreise, welche in Fig. 5 jeweils asymmetrisch in den Kugeln 9 liegen, sollen lediglich deren Kugelform andeuten). Die kleineren Partikel 10 sind in der Draufsicht nach Fig. 6 erkennbar.

Die Figuren 7 und 8 zeigen ein erstes Beispiel eines Atemluftfilters 1 mit Umluftfunktion. Hierin ist ein Maskenbereich 12, welcher den Maskenkörper 2 umfasst, von einem daran angeschlossenen Aufbereitungsbereich 13 zu unterscheiden. Die verschiedenen Bereiche 12, 13 verbindende Leitungen sind mit 14 bezeichnet.

Wie aus Fig. 7 hervorgeht, wird aus dem Maskenbereich 12 Luft mit Hilfe einer Pumpe 16 abgepumpt, welche in Fig. 8 vergrößert erkennbar ist. Die Pumpe 16, welche als Kleingebläse ausgebildet ist, saugt zum einen Umluft und zum anderen Frischluft an, wobei die Frischluft durch eine Filterbox 19, in welcher sich eine in der beschriebenen Art aufgebaute Filterschicht 5 befindet, einströmt. Abweichend vom Ausführungsbeispiel nach Fig. 1 ist in der Ausgestaltung nach Fig. 7 der Maskenkörper 2 aus einem luftundurchlässigen Material herstellbar, da die gesamte Filterfunktion von der Filterbox 19 übernommen werden kann.

Das Mischungsverhältnis zwischen Umluft und Frischluft ist mit Hilfe eines Ventils 17 einstellbar. Weiter sind in Fig. 7 ein Stellventil 15, mit welchem der Volumenstrom der mittels der Pumpe 16 in den Maskenkörper 2 geleiteten Luft sowie ein Abluftventil 23, über welches Luft nach außen abgelassen werden kann, erkennbar. An das Abluftventil 23 kann eine weitere, nicht dargestellte Filtereinrichtung angeschlossen sein. Anschlussteile am Maskenkörper 2 sind mit 18 bezeichnet.

Die Ausführungsform nach den Fig. 9 und 10 unterscheidet sich von der Ausgestaltung nach den Fig. 7 und 8 insbesondere dadurch, dass der Maskenkörper 2 als Doppelkammerelement mit einem unmittelbar dem Gesicht des Nutzers vorgesetztem Maskeninnenraum 20, das heißt Luftbereitstellungsraum, und einem dem Maskeninnenraum 20 vorgesetzten Maskenzwischenraum 21 ausgebildet ist. Ein Einstellventil 22 ist in diesem Fall an den Maskenzwischenraum 21 angeschlossen. Der Maskenzwischenraum 21, welcher eine Mischluftkammer darstellt, ist beidseitig, das heißt sowohl zum Maskeninnenraum 20 hin als auch zum Außenraum hin, durch ein Filterelement 5 begrenzt.

Luft, welche aus dem Maskenzwischenraum 21 über das Einstellventil 22 angesaugt wird, wird analog zur Gestaltung nach Fig. 7 mit Hilfe einer hier nicht dargestellten Pumpe 16 über Anschlussteile 18, welche seitlich am Maskenkörper 2 angebracht sind, zurückgeleitet, so dass auch in diesem Fall Luft teilweise rezirkuliert. Im Vergleich zur Bauform nach Fig. 7 hat der Maskenkörper 2 nach Fig. 9 nur ein moderat erhöhtes Gewicht sowie geringfügig vergrößerte Abmessungen, so dass der Tragekomfort durch den im Fall von Fig. 9 zusätzlich vorhandenen Maskenzwischenraum 21 nicht wesentlich beeinflusst ist. Ein Vorteil der Ausführungsform nach Fig. 9 liegt darin, dass durch die Bereitstellung von zwei Filterflächen, nämlich zum einen der Fläche zwischen dem Außenraum und dem Maskenzwischenraum 21 und zum anderen der Fläche zwischen den Räumen 20, 21, der Luftstrom pro Filterfläche und damit auch der vom Nutzer des Atemluftfilters 1 spürbare Widerstand bei der Atmung reduziert ist.

Bezugszeichenliste

1   Atemluftfilter
2   Maskenkörper
3   Dichtung
4   Überdruckventil
5   Filterelement
6   Trägerschicht
7   Filterschicht
8   Deckschicht
9   kugelige Partikel ersten Typs
10  kugelige Partikel zweiten Typs
11  Oberfläche der Trägerschicht
12  Maskenbereich
13  Aufbereitungsbereich
14  Leitung
15  Stellventil
16  Pumpe
17  Ventil
18  Anschlussteil
19  Filterbox
20  Maskeninnenraum
21  Maskenzwischenraum
22  Einstellventil
23  Abluftventil

A       Abstand vor der Oberfläche der Trägerschicht
$D_9$   Durchmesser der kugeligen Partikel ersten Typs
$D_{10}$  Durchmesser der kugeligen Partikel ersten Typs
$M_9$   Maximum der Häufigkeitsverteilung der Mittelpunkte der kugeligen Partikel ersten Typs
$M_{10}$  Maximum der Häufigkeitsverteilung der Mittelpunkte der kugeligen Partikel zweiten Typs
MA      Abstand zwischen Maxima
n       Häufigkeit
$V_9$   Häufigkeitsverteilung der Mittelpunkte der kugeligen Partikel ersten Typs
$V_{10}$  Häufigkeitsverteilung der Mittelpunkte der kugeligen Partikel zweiten Typs

## Patentansprüche

1. Atemluftfilter (1), mit einer auf einer Trägerschicht (6) befindlichen Filterschicht (7), welche aus kugeligen Partikeln (9) eines ersten Typs, die einen ersten mittleren Durchmesser ($D_9$) aufweisen, und kugeligen Partikeln (10) eines zweiten Typs, die einen im Vergleich mit den Partikeln (9) ersten Typs geringeren zweiten mittleren Durchmesser ($D_{10}$) aufweisen, aufgebaut ist, wobei die Häufigkeitsverteilung ($V_9$, $V_{10}$) der Abstände der Partikelmittelpunkte von der Trägerschicht (6) bei jedem Partikeltyp (9, 10) mindestens ein Maximum ($M_9$, $M_{10}$) aufweist, und wobei zwischen einem Maximum ($M_9$) der die Partikel (9) ersten Typs betreffenden Häufigkeitsverteilung ($V_9$) und einem Maximum ($M_9$, $M_{10}$) der die Partikel (10) zweiten Typs (10) betreffenden Häufigkeitsverteilung ($V_{10}$) ein Abstand (MA) existiert, welcher geringer als der erste mittlere Durchmesser ($D_9$) ist.

2. Atemluftfilter (1) nach Anspruch 1, **dadurch gekennzeichnet, dass** der erste mittlere Durchmesser ($D_9$) mindestens das Dreifache, insbesondere das Fünffache, des zweiten mittleren Durchmessers ($D_{10}$) beträgt.

3. Atemluftfilter (1) nach Anspruch 1 oder 2, **dadurch gekennzeichnet, dass** der erste mittlere Durchmesser ($D_9$) mindestens 3 μm und höchstens 10 μm beträgt, wobei der zweite mittlere Durchmesser ($D_{10}$) mindestens 50 nm und höchstens 2 μm beträgt.

4. Atemluftfilter (1) nach einem der Ansprüche 1 bis 3, **dadurch gekennzeichnet, dass** zumindest als Partikel (9, 10) ersten Typs $Si_2O_3$-Partikel vorgesehen sind.

5. Atemluftfilter (1) nach einem der Ansprüche 1 bis 4, **dadurch gekennzeichnet, dass** die Filterschicht (5) mindestens zwei und höchstens vier Lagen an Partikeln (9) des ersten Typs aufweist, wobei Partikel (9) ersten Typs, welche unterschiedlichen Lagen zuzurechnen sind, unmittelbar aufeinander liegen und zwischen diesen sich kontaktierenden Partikeln (9) erstens Typs Partikel (10) des zweiten Typs platziert sind.

6. Atemluftfilter (1) nach einem der Ansprüche 1 bis 5, **gekennzeichnet durch** eine Mischluftkammer (21), welche durch jeweils eine Filterschicht (5) einerseits von einem Außenraum und andererseits von einem dem Gesicht des Nutzers unmittelbar vorzusetzenden Luftbereitstellungsraum (20) getrennt ist, wobei zwischen den Luftbereitstellungsraum (20) und die Mischluftkammer (21) ein Überdruckventil (4) geschaltet ist und an die Mischluftkammer (21) eine zur Verbindung mit einer rezirkulierenden Förder- und Filtereinrichtung (16, 19) vorgesehene Abluftleitung (14) angeschlossen ist.

7. Verwendung des Sol-Gel-Verfahrens zur Herstellung von Partikeln zumindest eines Typs an Partikeln (9, 10) des Atemluftfilters (1) nach Anspruch 1.

8. Verfahren zum Betrieb eines Atemluftfilters (1) nach Anspruch 1, wobei ein Teil der Atemluft rezirkuliert wird.

9. Verfahren nach Anspruch 8, **dadurch gekennzeichnet, dass** eine Luftmischung, welche zum größeren Teil aus ausgeatmeter Luft und lediglich zu einem geringeren Teil aus Frischluft gebildet ist, rezirkuliert wird.

**10.** Verfahren nach Anspruch 8 oder 9, **dadurch gekennzeichnet, dass** die rezirkulierende Luft mittels einer von einem Maskenkörper (2) des Atemluftfilters (1) räumlich getrennten Pumpe (16) gefördert wird.

**11.** Verfahren nach Anspruch 10, **dadurch gekennzeichnet, dass** die Pumpe (16) eine Mischung aus mittels eines gesonderten, außerhalb eines Maskenkörpers (2) des Atemluftfilters (1) befindlichen Frischluftfilters aufbereiteter, feingefilterter Frischluft und rezirkulierender Luft fördert.

**12.** Verfahren nach Anspruch 11, **dadurch gekennzeichnet, dass** das Mischungsverhältnis zwischen Frischluft und rezirkulierender Luft mittels eines der Pumpe vorgeschalteten Drossel- oder Mischungsorgans (17) eingestellt wird.

**13.** Verfahren nach einem der Ansprüche 9 bis 12, **dadurch gekennzeichnet, dass** ein Teil der zirkulierenden Luft permanent über ein Ablassventil (23) nach außen abgeleitet wird.

**14.** Verfahren nach Anspruch 13, **dadurch gekennzeichnet, dass** die durch das Ablassventil (23) strömende Luft ungefiltert nach außen abgeleitet wird.

**15.** Verfahren nach Anspruch 13, **dadurch gekennzeichnet, dass** die durch das Ablassventil (23) strömende Luft gefiltert nach außen abgeleitet wird.

EP 3 932 517 A1

# Fig. 1

# Fig. 2

# Fig. 3

# Fig. 4

# Fig. 5

# Fig. 6

**Fig. 7**

**Fig. 8**

**Fig. 9**

**Fig. 10**

Europäisches
Patentamt

European
Patent Office

Office européen
des brevets

# EUROPÄISCHER RECHERCHENBERICHT

Nummer der Anmeldung

EP 21 18 0852

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 37 19 418 C1 (SANDLER HELMUT HELSA WERKE) 21. Juli 1988 (1988-07-21) | 1-6,8-15 | INV. |
| Y | * Absätze [0003] - [0005], [0018], [0019]; Abbildung 1 * | 7 | B01D39/02 A41D13/11 A62B18/00 A62B18/02 |
| X,D | DE 37 19 419 A1 (SANDLER HELMUT HELSA WERKE [DE]) 29. Dezember 1988 (1988-12-29) | 1-6,8-15 | A62B18/10 |
| Y | * Spalte 2, Zeilen 41-44; Abbildungen 1,2 * <br><br> * Spalte 3, Zeilen 33-57 * <br> * Spalte 4, Zeile 46 - Spalte 5, Zeile 56 * <br><br> * Spalte 6, Zeile 68 - Spalte 7, Zeile 31 * | 7 | |
| X | US 2014/336295 A1 (CHI CHANGZAI [US] ET AL) 13. November 2014 (2014-11-13) | 7 | |
| A | * Absätze [0001], [0002], [0045], [0053] - [0055] * | 1-6,8-15 | |
| A | US 2017/189727 A1 (HUNTER CHARLES ERIC [US] ET AL) 6. Juli 2017 (2017-07-06) * Absätze [0002], [0050], [0051], [0054], [0055], [0064] - [0068], [0122] - [0124], [0136] - [0139]; Abbildungen 1,2,4,14-17 * | 1-15 | **RECHERCHIERTE SACHGEBIETE (IPC)** <br> B01D <br> A44C <br> A41D <br> A62C <br> A62B <br> B01J |
| A | EP 0 338 551 A2 (BLUECHER HASSO VON [DE]; RUITER ERNEST DE [DE]) 25. Oktober 1989 (1989-10-25) * Spalte 2, Zeilen 4-34; Beispiel 1 * * Spalte 6, Zeilen 4-20 * | 1-15 | |
| A | CN 208 554 222 U (GUANGZHOU ZUNZHUO ENVIRONMENTAL PROTECTION TECH CO LTD) 1. März 2019 (2019-03-01) * das ganze Dokument * | 1-15 | |

Der vorliegende Recherchenbericht wurde für alle Patentansprüche erstellt

| Recherchenort | Abschlußdatum der Recherche | Prüfer |
|---|---|---|
| Den Haag | 28. Oktober 2021 | Howe, Patrick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 18 0852

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2021

| Im Recherchenbericht angeführtes Patentdokument | | Datum der Veröffentlichung | Mitglied(er) der Patentfamilie | | Datum der Veröffentlichung |
|---|---|---|---|---|---|
| DE 3719418 | C1 | 21-07-1988 | DE | 3719418 C1 | 21-07-1988 |
| | | | EP | 0294708 A2 | 14-12-1988 |
| | | | IL | 83882 A | 30-06-1991 |
| | | | NO | 169699 B | 21-04-1992 |
| | | | US | 4800190 A | 24-01-1989 |
| DE 3719419 | A1 | 29-12-1988 | KEINE | | |
| US 2014336295 | A1 | 13-11-2014 | KEINE | | |
| US 2017189727 | A1 | 06-07-2017 | KEINE | | |
| EP 0338551 | A2 | 25-10-1989 | DE | 3813564 A1 | 02-11-1989 |
| | | | EP | 0338551 A2 | 25-10-1989 |
| | | | JP | H0277273 A | 16-03-1990 |
| | | | US | 4992084 A | 12-02-1991 |
| CN 208554222 | U | 01-03-2019 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3719419 A1
- DE 3719233 A1
- DE 2804154 B1
- DE 102012215877 A1
- DE 3813564 A1
- WO 2008052342 A1
- EP 0714696 A2
- WO 2019105611 A1
- EP 2363185 B1
- DE 4403359 C2
- DE 4207533 C2
- EP 1329433 B1
- EP 2134885 B1

**In der Beschreibung aufgeführte Nicht-Patentliteratur**

- **ERGUN.** Sabri: fluid flow through packed columns. *Chemical Engineering Progress,* 1952, vol. 48 (2), 89-94